# EUROPÄISCHE PATENTSCHRIFT

(11) **EP 3 068 964 B1**
(45) Veröffentlichungstag und Bekanntmachung des Hinweises auf die Patenterteilung: **13.03.2019**
(21) Anmeldenummer: 14809270.3
(22) Anmeldetag: 27.10.2014
(51) Int. Cl.: E05F 15/63, A47B 88/457, A47B 88/463, A47B 88/40

(54) **ANORDNUNG MIT EINEM MÖBELANTRIEB**
ARRANGEMENT WITH A FURNITURE DRIVE
AGENCEMENT AVEC MÉCANISME DE COMMANDE DE MEUBLE

(30) Priorität: 14.11.2013 AT 8812013
(43) Veröffentlichungstag der Anmeldung: 21.09.2016
(73) Patentinhaber: Julius Blum GmbH, 6973 Höchst (AT)
(72) Erfinder: FRIESENECKER, Gerald, A-6923 Lauterach (AT); BOHLE, Wolfgang, A-6840 Götzis (AT)
(74) Vertreter: Torggler & Hofinger Patentanwälte
(86) Internationale Anmeldenummer: PCT/AT2014/000193
(87) Internationale Veröffentlichungsnummer: WO 2015/070267

(56) Entgegenhaltungen:
- WO-A1-2011/130758
- WO-A2-2006/113961
- AT-B1- 504 838

## Beschreibung

Die vorliegende Erfindung bezieht sich auf eine Anordnung mit den Merkmalen des Oberbegriffs des Patentanspruchs 1.
In der AT 504 838 B1 ist ein Möbelantrieb mit einem motorisch angetriebenen Ausstoßhebel bekannt geworden, wobei in Montagelage die Ausstoßfläche des Ausstoßhebels in der geschlossenen Endlage des bewegbaren Möbelteiles an einem Anschlag eines Stößels lose anliegt. Der Stößel bildet einen Teil einer Kraftübertragungseinrichtung, wobei die während des Ausstoßvorganges ausgeübte Kraft über einen zwischen dem Ausstoßhebel und dem bewegbaren Möbelteil gebildeten Zwischenraum auf das bewegbare Möbelteil übertragbar ist. Auf diese Weise sind auch bewegbare Möbelteile aus der geschlossenen Endlage ausstoßbar, die nur in einem sehr geringen Ausmaß oder gar nicht in den Möbelkorpus hineinragen (Möbeltüren, Möbelklappen oder Schubladen, deren Tiefe wesentlich kleiner als die Tiefe des Möbelkorpus ist).
Bei den bekannten Möbelantrieben mit einem Ausstoßhebel liegt üblicherweise die Ausstoßfläche des Ausstoßhebels lose an dem auszustoßenden Möbelteil oder einem Kraftübertragungsteil an. Die Übertragung der Bewegung beim Ausstoßvorgang erfolgt kraftschlüssig durch gleitendes Abstützen der Ausstoßfläche am bewegbaren Möbelteil bzw. am Kraftübertragungsteil, wobei durch den auftretenden Schlupf ein relativ niedriger Wirkungsgrad erzielbar ist.

In der WO 2011/130758 A1 ist eine Anordnung gemäß dem Oberbegriff des Anspruchs 1 mit einem Möbelantrieb mit einem bogenförmig ausgebildeten Ausstoßhebel gezeigt, welcher durch eine elektrische Antriebseinheit antreibbar ist. Der Ausstoßhebel ist durch zwei Ausstoßhebelteile gebildet, welche durch eine Verstelleinrichtung derart verstellbar sind, sodass sich die Länge des Ausstoßhebels beim Ausstoßvorgang verändert. Zur Längenverstellung der Ausstoßhebelteile ist ein Getriebe vorgesehen, welches sich im Inneren des Ausstoßhebels befindet.

In der WO 2006/113961 A2 ist ein Möbelantrieb mit einem schwenkbar gelagerten Ausstoßhebel gezeigt, welcher durch einen Kraftspeicher beaufschlagbar und mit dem bewegbaren Möbelteil koppelbar ist. Auf diese Weise ist der Ausstoßhebel nach Beendigung des Ausstoßvorganges in eine weiter geöffnete Offenstellung bewegbar, sodass der Benutzer unmittelbar nach oder gleichzeitig mit Beginn der Schließbewegung des bewegbaren Möbelteiles den Kraftspeicher zu laden beginnt.

Aufgabe der vorliegenden Erfindung ist es, eine Anordnung der eingangs erwähnten Gattung mit einer verbesserten Kraftübertragungsmöglichkeit anzugeben.

Dies wird erfindungsgemäß durch die Merkmale des Patentanspruchs 1 gelöst. Weitere Ausgestaltungen der Erfindung sind in den abhängigen Unteransprüchen angegeben.

Gemäß der Erfindung ist vorgesehen, dass die Ausstoßfläche des Ausstoßhebels wenigstens bereichsweise eine Verzahnung aufweist.

Durch das Vorsehen einer Verzahnung an der Ausstoßfläche des Ausstoßhebels kann eine formschlüssige Kraftübertragung ermöglicht werden, wobei also im Vergleich zu einer kraftschlüssigen Übertragung wesentlich höhere Kräfte übertragbar sind. Die formschlüssige Übertragung ermöglicht eine schlupffreie, winkelgenaue Übertragung der Drehbewegung des Ausstoßhebels bei hohem Wirkungsgrad.

Gemäß einem Ausführungsbeispiel kann vorgesehen sein, dass die Verzahnung des Ausstoßhebels zumindest einen gekrümmten Abschnitt aufweist. Die Verzahnung kann dabei so ausgebildet sein, dass beim Ausstoßen des bewegbaren Möbelteiles aus der geschlossenen Endlage (d.h. wenn die elektrische Antriebseinheit erst langsam anfährt) eine hohe Kraftübersetzung bei niedriger Wegübersetzung vorliegt. Auf diese Weise steht beim Start aus der geschlossenen Endlage ein besonders großes Drehmoment zur Verfügung, sodass auch schwer beladene Schubkästen problemlos aus der geschlossenen Endlage ausstoßbar sind. Das Übersetzungsverhältnis kann sich dann ausgehend von der geschlossenen Endlage des bewegbaren Möbelteils über einen vorgegebenen Drehwinkelbereich des Ausstoßhebels verkleinern, sodass die Kraftübersetzung verkleinert und die Wegübersetzung vergrößert wird.

Die Verzahnung des Ausstoßhebels kann zumindest abschnittsweise als Unrundverzahnung ausgebildet sein. Beim Einsatz einer solchen Unrundverzahnung können nämlich variable Drehmomentverläufe bei konstanter Antriebsleistung der elektrischen Antriebseinheit realisiert werden. Während beim Einsatz von Zahnradgetrieben mit konstanter Übersetzung die gesamte Verzahnung sowie die elektrische Antriebseinheit stets hinsichtlich des maximal auftretenden Drehmomentes ausgelegt werden müssen, so kann bei einer Unrundverzahnung mit variabler Übersetzung der erforderliche Antriebsmomentenverlauf entsprechend eines konstant niedrigen Antriebsmomentes optimiert werden. Das Unrundgetriebe kann als umlauffähiges Zahnradgetriebe oder auch als Zahnsegment ausgebildet sein.
Gemäß einem Ausführungsbeispiel ist die Verzahnung mit dem Ausstoßhebel bewegungsgekoppelt verbunden oder zusammen mit dem Ausstoßhebel einstückig ausgebildet. Die Verzahnung ist beispielsweise in Form eines Aufsatzteiles mit dem Ausstoßhebel verbindbar, alternativ kann die Verzahnung als inhärenter Teil des Ausstoßhebels ausgebildet sein. Die Herstellung eines solchen Ausstoßhebels ist beispielsweise durch ein Spritzgussverfahren problemlos möglich.
Gemäß einer weiteren Ausführungsform kann der Ausstoßhebel durch die Anordnung der Verzahnung längenveränderlich ausgebildet sein, wobei über eine Verstelleinrichtung die Länge des Ausstoßhebels einstellbar ist. Alternativ kann zur Verlängerung des Ausstoßhebels die Verzahnung in Form eines Aufsatzteiles auf den Ausstoßhebel, vorzugsweise auf das freie Ende desselben, aufgesteckt werden.

Die erfindungsgemäße Anordnung ist durch einen Möbelantrieb der beschriebenen Art und durch eine Kraftübertragungseinrichtung gekennzeichnet, wobei die Verzahnung des Ausstoßhebels mit einer Gegenverzahnung der Kraftübertragungseinrichtung zusammenwirkt. Die Gegenverzahnung kann dabei an einem Zahnrad, einem Zahnradabschnitt, einem verzahnten Hebel, einer Zahnscheibe oder an einem Zahnriemen der Kraftübertragungseinrichtung ausgebildet sein.

Zur Reduzierung der Geräuschentwicklung kann die Verzahnung und/oder die mit der Verzahnung zusammenwirkende Gegenverzahnung zumindest bereichsweise mit einer schalldämmenden Beschichtung versehen sein.

Weitere Einzelheiten und Vorteile der vorliegenden Erfindung ergeben sich anhand der in den Figuren gezeigten Ausführungsbeispiele. Dabei zeigt bzw. zeigen:
- Fig. 1: ein Möbel mit einem Möbelkorpus und einem relativ dazu bewegbar gelagerten Möbelteil in einer perspektivischen Darstellung,
- Fig. 2a, 2b: der Möbelantrieb und eine Kraftübertragungseinrichtung in Montagelage am Möbelkorpus sowie in einer perspektivischen Darstellung,
- Fig. 3: der Möbelantrieb und die Kraftübertragungseinrichtung in einer Explosionsdarstellung,
- Fig. 4a-4d: zeitliche Abfolgen des Ausstoßvorganges des bewegbaren Möbelteiles ausgehend von der geschlossenen Endlage in perspektivischen Ansichten,
- Fig. 5a-5d: zeitliche Abfolgen des Ausstoßvorganges des bewegbaren Möbelteiles ausgehend von der geschlossenen Endlage in einer Draufsicht,
- Fig. 6: eine weitere Ausführungsform eines Möbelantriebes, wobei der Ausstoßhebel zusammen mit einer Verzahnung einstückig ausgebildet ist.

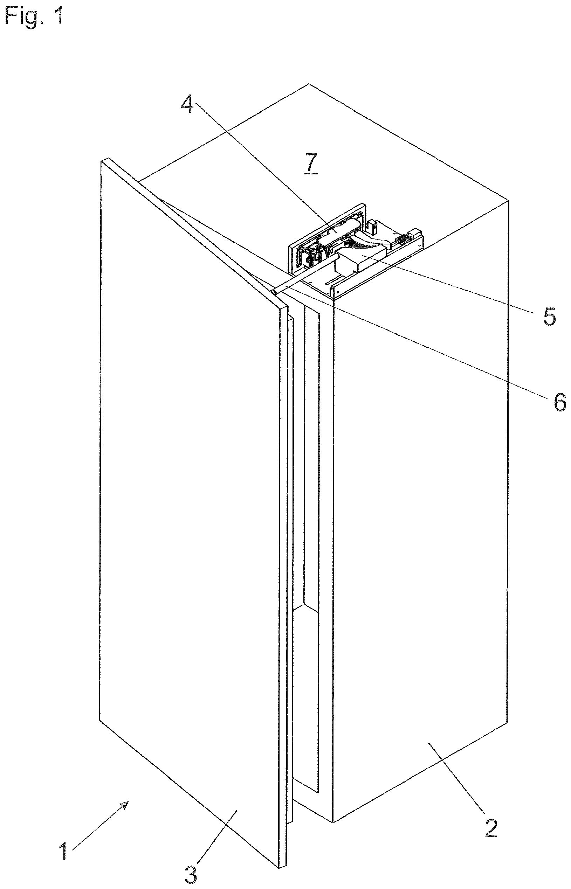

Fig. 1 zeigt ein Möbel 1 mit einem Möbelkorpus 2 und einem relativ dazu bewegbaren Möbelteil 3 in einer perspektivischen Darstellung. Im gezeigten Ausführungsbeispiel ist das bewegbare Möbelteil 3 als Türe ausgebildet, welche um eine senkrecht verlaufende Achse relativ zum Möbelkorpus 2 schwenkbar gelagert ist. Am Schrankdeckel 7 des Möbelkorpus 2 sind ein Möbelantrieb 4 und eine Kraftübertragungseinrichtung 5 zur Übertragung einer Kraft auf das bewegbare Möbelteil 3 gelagert, wobei das bewegbare Möbelteil 3 über einen bewegbar gelagerten Stößel 6 aus der geschlossenen Endlage ausstoßbar ist. Zu diesem Zweck überragt das bewegbare Möbelteil 3 den Schrankdeckel 7 des Möbelkorpus 2, sodass die Rückseite des bewegbaren Möbelteiles 3 eine Anschlagfläche für den ausfahrbaren Stößel 6 ausbildet.

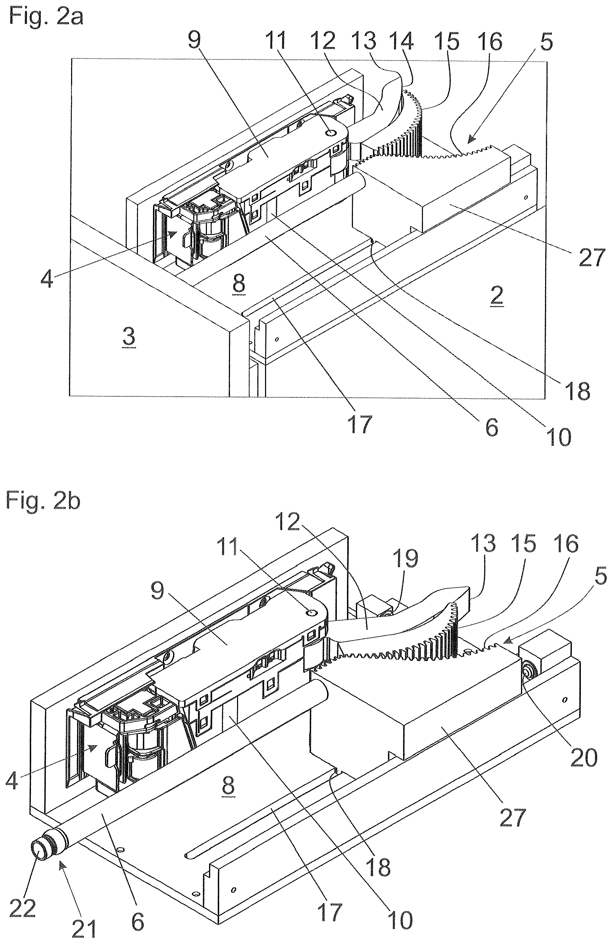

Fig. 2a zeigt eine Ansicht des am Möbelkorpus 2 angeordneten Möbelantriebes 4 und der Kraftübertragungseinrichtung 5 gemäß Fig. 1 in einer vergrößerten Darstellung. Der Möbelantrieb 4 ist an einer am Möbelkorpus 2 zu befestigenden Grundplatte 8 gelagert und umfasst ein Gehäuse 9, in welchem eine elektrische Antriebseinheit 10 mit einem Getriebe zum Antreiben eines Ausstoßhebels 12 angeordnet ist. Der Ausstoßhebel 12 ist um eine, vorzugsweise in Montagelage senkrecht verlaufende, Drehachse 11 relativ zum Gehäuse 9 schwenkbar gelagert. Die Auslösung der elektrischen Antriebseinheit 10 kann durch Sensoren erfolgen, die eine manuell von einem Benutzer erzeugte (Schließ-)Bewegung des bewegbaren Möbelteils 3 erfassen. Eine einfache Auslösbarkeit des Möbelantriebes 4 ist durch eine Touch-Latch-Funktionalität gegeben. Hierfür kann vorgesehen sein, dass ein Sensor, vorzugsweise ein Drehpotentiometer, zur Erfassung der Winkelstellung des Ausstoßhebels 12 vorgesehen ist, wobei die Signale des Sensors einer Steuer- oder Regeleinheit des Möbelantriebes 4 zuführbar sind und wobei die elektrische Antriebseinheit 10 von dieser Steuer- oder Regeleinheit steuer- oder regelbar ist. Der Ausstoßhebel 12 weist eine zwischen der Drehachse 11 und dem freien Hebelende 13 des Ausstoßhebels 12 angeordnete Ausstoßfläche 14 auf, welche mit einer Verzahnung 15 zur formschlüssigen Kraftübertragung versehen ist. Im gezeigten Ausführungsbeispiel ist die Verzahnung 15 koaxial zur Drehachse 11 des Ausstoßhebels 12 schwenkbar gelagert und mit diesem bewegungsgekoppelt verbunden, sodass sich bei einer Verschwenkung des Ausstoßhebels 12 auch die Verzahnung 15 mitbewegt. Die Verzahnung 15 des Ausstoßhebels 12 ist zumindest abschnittsweise als Unrundverzahnung ausgebildet, sodass ein variables Drehmoment auf das bewegbare Möbelteil 3 übertragbar ist. Die Kraftübertragungseinrichtung 5 umfasst eine mit dem Stößel 6 verbundene Gegenverzahnung 16, welche mit der Verzahnung 15 des Ausstoßhebels 12 zusammenwirkt. Der Stößel 6 ist entlang einer Führung 17 relativ zur Grundplatte 8 linear verschiebbar gelagert, wobei in der gezeigten Figur ein mit dem Stößel 6 verbundener Schieber 27 mit einem Führungselement 18 in Form einer Rippe entlang der Führung 17 verschiebbar gelagert ist.

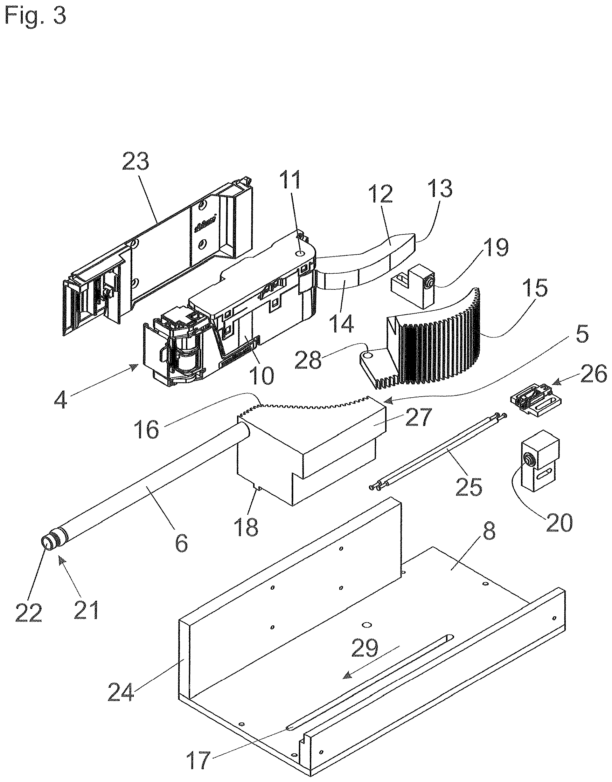

Fig. 2b zeigt den Möbelantrieb 4 mit der zusammenwirkenden Kraftübertragungseinrichtung 5 in einer perspektivischen Darstellung. Zur Begrenzung der inneren Endstellung des Ausstoßhebels 12 sowie zur Begrenzung der inneren Endstellung des Schiebers 27 sind - vorzugsweise federnd ausgebildete - Anschläge 19 und 20 vorgesehen. Durch eine Zuhaltevorrichtung 21 kann das bewegbare Möbelteil 3 in der vollständigen Schließstellung gehalten und/oder gegen Ende der Schließbewegung in die vollständige Schließstellung bewegt werden. Die Zuhaltevorrichtung 21 umfasst wenigstens zwei Teile, wobei ein erster Teil 22 am Stößel 6 und ein (nicht gezeigter) zweiter Teil am bewegbaren Möbelteil 3 angeordnet oder ausgebildet ist, wobei der Teil 22 in der Schließstellung des bewegbaren Möbelteiles 3 auf das am bewegbaren Möbelteil 3 korrespondierende Teil eine magnetische Anziehungskraft ausübt. Der als Magnet ausgebildete Teil 22 ist quer zur Längserstreckung des Stößels 6, insbesondere in horizontaler und/oder vertikaler Richtung relativ zum Stößel 3 bewegbar gelagert. Zudem kann eine Federvorrichtung 25 (Fig. 3) vorgesehen sein, durch die der Stößel 6 und/oder der Ausstoßhebel 12 nach einem Ausstoßvorgang wieder in eine Bereitschaftsstellung rückstellbar ist.

Fig. 3 zeigt die Anordnung mit dem Möbelantrieb 4 und mit der Kraftübertragungseinrichtung 5 in einer Explosionsdarstellung. Die Grundplatte 8 weist eine in Ausstoßrichtung 29 des Stößels 6 verlaufende Führung 17 auf, entlang der ein Führungselement 18 des Schiebers 27 verschiebbar gelagert ist. Die Ausstoßrichtung 29 des Stößels 6 verläuft dabei quer zur (Haupt-)Ausstoßrichtung des Ausstoßhebels 12. Im gezeigten Ausführungsbeispiel ist der Stößel 6 zusammen mit dem Schieber 27, dem Führungselement 18 und der Gegenverzahnung 16 einstückig ausgebildet. Der Möbelantrieb 4 mit dem Gehäuse 9 ist an einem Aufnahmeprofil 23, welches an einer in Montagelage senkrecht verlaufende Leiste 24 anzuschrauben ist, über eine Schnappverbindung lösbar befestigbar. Der Möbelantrieb 4 umfasst einen um eine Drehachse 11 schwenkbar gelagerten Ausstoßhebel 12 mit einer Ausstoßfläche 14, die mit einer Verzahnung 15 versehen ist. Die Verzahnung 15 ist um eine Schwenkachse 28 gelagert und mit dem Ausstoßhebel 12 bewegungsgekoppelt verbunden. Neben den federnden Anschlägen 19, 20 zur Begrenzung der inneren Endstellung des Ausstoßhebels 12 und des Stößels 6 ist eine Federvorrichtung 25 vorgesehen, welche zumindest eine als Schraubenfeder ausgebildete Zugfeder umfasst. Die Federvorrichtung 25 ist mit einem ersten Endbereich am Stößel 6, mit einem zweiten Endbereich an einer, vorzugsweise verstellbaren, Federbasis 26 verankert. Durch die Federvorrichtung 25 kann der Stößel 6 und/oder der Ausstoßhebel 12 wieder in eine Ausgangslage rückgestellt werden. Am freien Ende des Stößels 6 ist ein erster Teil 22 einer Zuhaltevorrichtung 21 angeordnet, wobei der Teil 22 mit einem korrespondierenden Teil, der am bewegbaren Möbelteil 3 angeordnet oder ausgebildet ist, magnetisch zusammenwirkt. Die magnetische Haltekraft der Zuhaltevorrichtung 21 kann dabei so bemessen sein, dass sich das bewegbare Möbelteil 3 vom Teil 22 des Stößels 6 nach einem erfolgtem Ausstoßvorgang nicht ablöst, sodass erst ein Benutzer das bewegbare Möbelteil 3 vom Stößel 6 nach Überwindung der magnetischen Haltekraft ablöst. Dies stellt einen Sicherheitsaspekt dar, weil das bewegbare Möbelteil 3 nach einer Fehlauslösung (beispielsweise durch Eindrücken des bewegbaren Möbelteiles 3 durch Kleinkinder oder Haustiere) nicht von alleine vom Stößel 6 abgelöst wird, woraufhin nach einer vorgegebenen Zeitspanne durch eine Steuer- oder Regeleinheit des Möbelantriebes 4 eine Rückstellung des Ausstoßhebels 12 und damit auch eine Einziehung des bewegbaren Möbelteiles 3 (welches mit dem Stößel 6 magnetisch gekoppelt ist) durch die Kraft der Federvorrichtung 25 in die geschlossene Endlage möglich ist.

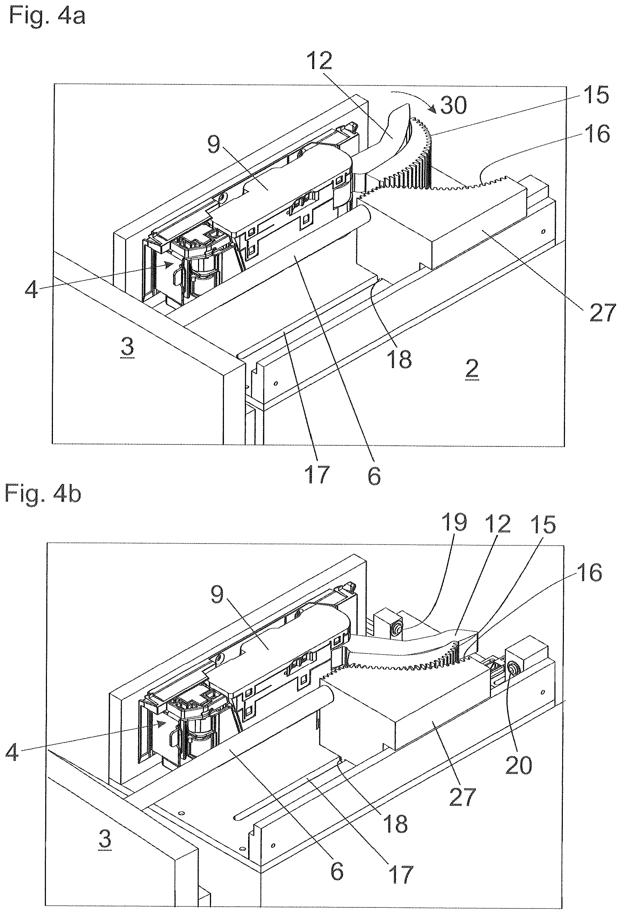

Fig. 4a-4d zeigen eine zeitliche Abfolge des Ausstoßvorganges des bewegbaren Möbelteiles 3. Ausgehend von der Schließstellung gemäß Fig. 4a wird der Ausstoßhebel 12 nach erfolgter Aktivierung der elektrischen Antriebseinheit 10 in Richtung des eingezeichneten Pfeils 30 ausgeschwenkt, wobei die Verzahnung 15 des Ausstoßhebels 12 mit der Gegenverzahnung 16 der Kraftübertragungseinrichtung 5 zusammenwirkt.

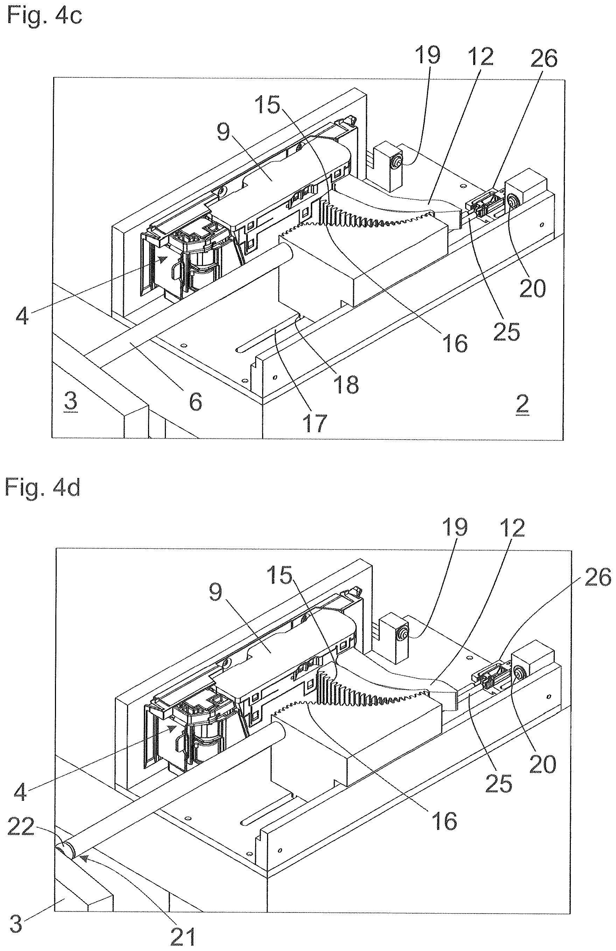

Fig. 4b zeigt den Stößel 6 nach einer geringen Ausfahrbewegung, wobei auch das bewegbare Möbelteil 3 geringfügig geöffnet ist. Fig. 4c zeigt eine weitere Offenstellung des Stößels 6, wobei die Verzahnung 15 und die Gegenverzahnung 16 aneinander ablaufen und eine formschlüssige Kraftübertragung erfolgt. Fig. 4d zeigt eine weitere Offenstellung des Stößels 6, wobei der Teil 22 der Zuhaltevorrichtung 21 mit dem bewegbaren Möbelteil 3 magnetisch gekoppelt ist. Ist die vollständige Offenstellung des Stößels 6 erreicht, so kann ein Benutzer das bewegbare Möbelteil 3 durch Hintergreifen aus der magnetischen Kopplung lösen und weiter in Richtung Offenstellung bewegen. Wird die magnetische Kopplung zwischen dem Teil 22 und dem bewegbaren Möbelteil 3 durch den Benutzer hingegen nicht aufgehoben, so wird das bewegbare Möbelteil 3 nach einer vorgegebenen Zeitspanne unter Aufrechterhaltung der magnetischen Kopplung wieder in die vollständige Schließstellung eingezogen. Am bewegbaren Möbelteil 3 ist selbstverständlich ein korrespondierender Teil der Zuhaltevorrichtung 21 anzuordnen oder auszubilden, sodass zwischen dem Teil 22 und dem bewegbaren Möbelteil 3 eine magnetische Anziehungskraft herstellbar ist. Alternativ ist es beispielsweise möglich, das bewegbare Möbelteil 3 zumindest bereichsweise metallisch auszubilden, wobei der magnetisch ausgebildete Teil 22 - gegebenenfalls durch Zwischenschaltung einer Kunststoffauflage zur Geräuschreduzierung - direkt auf einen metallischen Bereich des bewegbaren Möbelteiles 3 wirksam ist. Durch die vorgesehene Konstruktion sind somit auch Türen von Werkzeugschränken, Kühlschränken, Geschirrspülern oder Backrohren zu öffnen bzw. zu schließen.

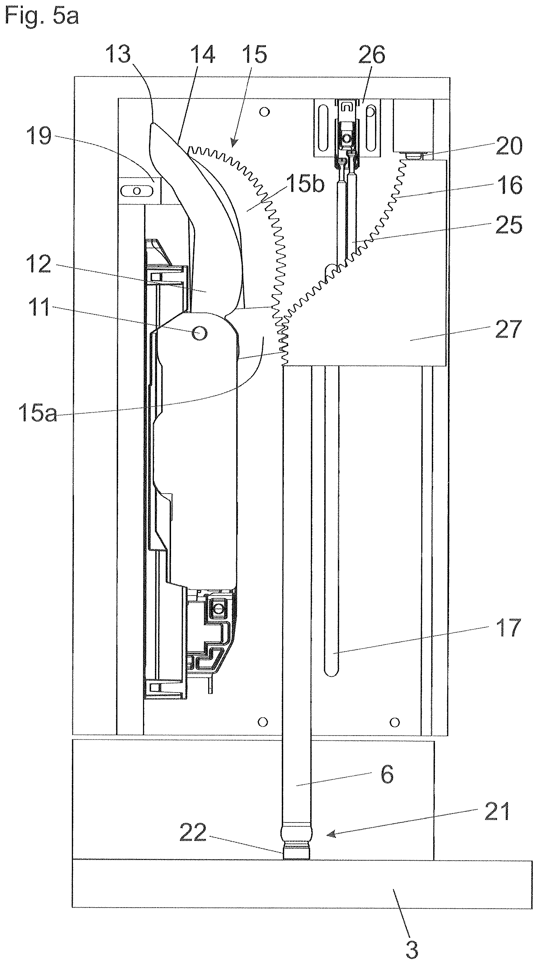

Fig. 5a-5d zeigen zeitliche Abfolgen des Ausstoßvorganges des bewegbaren Möbelteiles 3 ausgehend von der geschlossenen Endlage in einer Draufsicht. Fig. 5a zeigt die geschlossene Endlage des bewegbaren Möbelteiles 3, wobei diese Figur also der Abbildung gemäß Fig. 4a entspricht. Zu Beginn des Ausstoßvorganges liegen sowohl der Ausstoßhebel 12 als auch der Stößel 6 über den Schieber 27 an den ihnen zugehörigen Anschlägen 19 und 20 an. Die Verzahnung 15 umfasst einen ersten Abschnitt 15a und einen daran angeschlossenen zweiten Abschnitt 15b, wobei eine Bewegung des Stößels 6 in einem ersten Drehwinkelbereich des Ausstoßhebels 12 durch Zusammenwirken des ersten Abschnitts 15a mit einem korrespondierenden Abschnitt der Gegenverzahnung 16 bei hoher Kraftübersetzung bei geringer Wegübersetzung erfolgt. Zu Beginn des Ausstoßvorganges liegt nämlich effektiv ein kürzerer Kraftarm (d.h. der Abstand zwischen der Drehachse 11 und jener Stelle, an der sich die Verzahnung 15 und die Gegenverzahnung 16 gegenseitig berühren) vor, wodurch ein vorgegebenes Drehmoment M der elektrischen Antriebseinheit 10 in eine größere Kraft F auf das bewegbare Möbelteil 3 übersetzt wird.

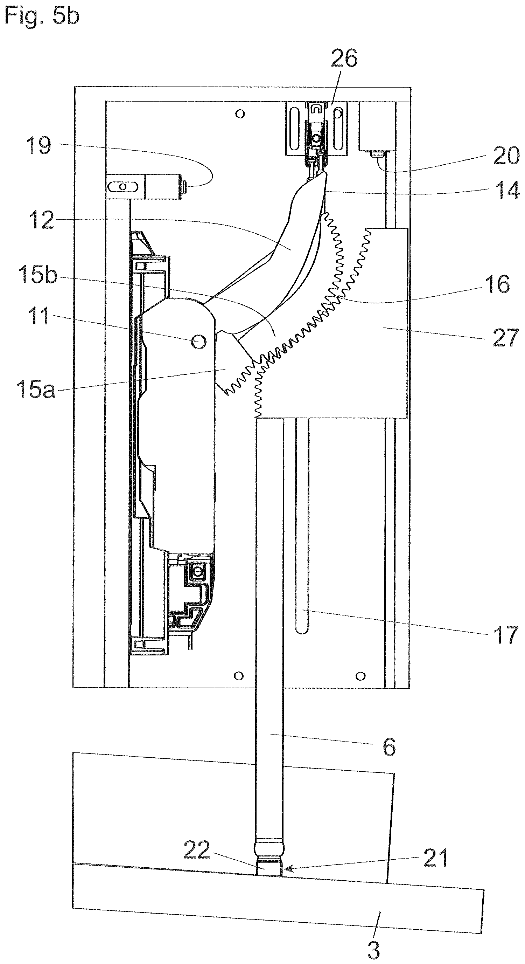

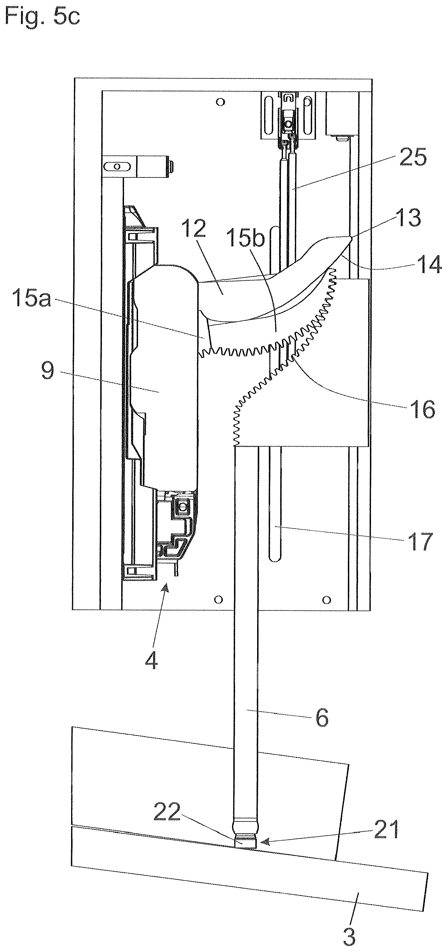

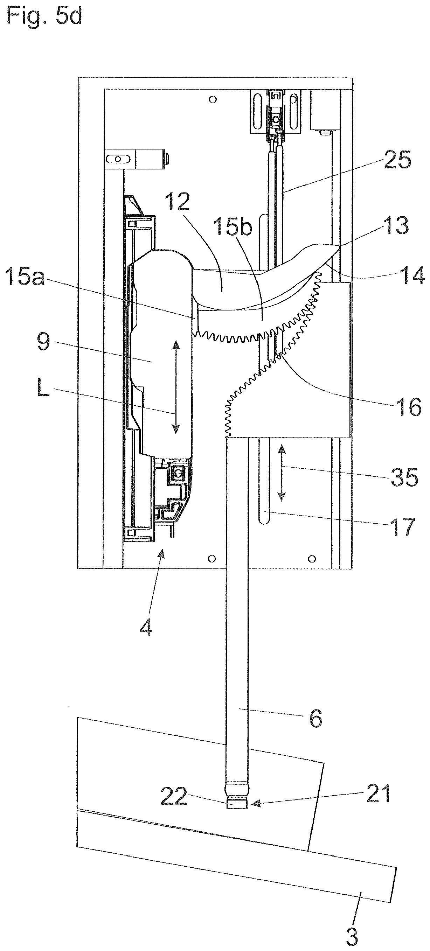

Fig. 5b-5d zeigen den weiteren Ablauf des Ausstoßvorganges, wobei in Fig. 5b der Abschnitt 15a bereits außer Eingriff mit der Gegenverahnung 16 ist. In einem zweiten Drehwinkelbereich, welcher sich an den ersten Drehwinkelbereich anschließt, erfolgt eine Bewegung des Stößels 6 bei geringerer Kraftübersetzung, welche sich bei einer weiteren Ausstoßbewegung des Ausstoßhebels 12 verkleinert. Die auf den Stößel 6 übertragene Kraft nimmt also ab, wobei jedoch eine raschere Ausfahrbewegung des Stößels 6 herbeigeführt wird. Nun wirkt also der als Unrundverzahnung ausgebildete Abschnitt 15b mit der Gegenverzahnung 16 zusammen, wobei der Schieber 27 mit dem damit verbundenen Stößel 6 mit einer höheren Wegübersetzung in Richtung Offenstellung bewegt wird. Fig. 5c zeigt eine weitere Offenstellung des Stößels 6, wobei gut erkennbar ist, dass der Ausstoßweg des Stößels 6 durch die unrunde Ausbildung der Verzahnung 15 bzw. Gegenverzahnung 16 vergrößerbar ist. In Fig. 5d wurde das bewegbare Möbelteil 3 durch händische Zugausübung in Richtung Offenstellung und nach erfolgtem Lösen der magnetischen Kopplung des Teiles 22 der Zuhaltevorrichtung 21 in eine weitere Offenstellung bewegt und kann anschließend daran frei bewegt werden. Anhand der Fig. 5a-5d ist erkennbar, dass im montierten Zustand des Möbelantriebes 4 die Stelle, an welcher die Verzahnung 15 und die Gegenverzahnung 16 sich gegenseitig berühren, beim Ausstoßen des bewegbaren Möbelteils 3 ausgehend von der Nähe der Drehachse 11 des Ausstoßhebels 12 (Fig. 5a) in Richtung zum freien Hebelende 13 des Ausstoßhebels 12 hin wandert (Fig. 5c), wobei eine im Wesentlichen gleichmäßige Veränderung des Kraftarms erfolgt und Sprünge in der ausgeübten Kraft vermieden sind. Erkennbar ist auch ein besonderer Vorteil der Erfindung, nämlich dass durch die gezeigte Konstruktion eine Kraftumlenkung und damit auch ein winkeliges Ausstoßen des Stößels 6 in Bezug zur Ausstoßrichtung des Ausstoßhebels 12 möglich ist. In der gezeigten Fig. 5d ist nämlich die Richtung 35 der Linearbewegung des Stößels 6 erkennbar, welche im Wesentlichen parallel zu einer Längsrichtung (L) des Gehäuses 9 des Möbelantriebs 4 verläuft.

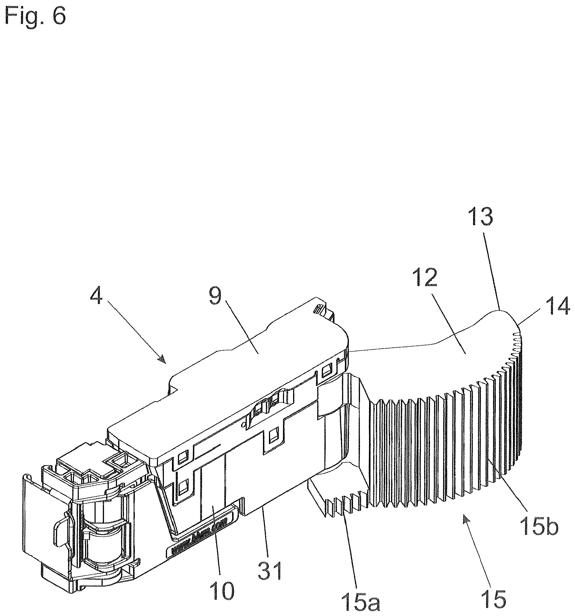

Fig. 6 zeigt einen Möbelantrieb 4 gemäß einer weiteren Ausführungsform, wobei die Verzahnung 15 zusammen mit dem Ausstoßhebel 12 einstückig ausgebildet ist. Die Verzahnung 15 umfasst einen ersten Abschnitt 15a und einen zweiten Abschnitt 15b, wobei diese beiden Abschnitte 15a, 15b jeweils unterschiedlich gekrümmt ausgebildet sind. Damit der erste Abschnitt 15a der Verzahnung 15 beim Ausstoßen des Ausstoßhebels 12 unter das Gehäuse 9 des Möbelantriebs 4 einschwenken kann, können an der Unterseite 31 des Gehäuses 9 (hier nicht ersichtliche) Noppen angeordnet werden, welche die Unterseite 31 des Gehäuses 9 von der Grundplatte 8 beabstanden damit ein Einschwenken des ersten Abschnitts 15a unter das Gehäuse 9 hinein möglich ist.

Gemäß einem möglichen Ausführungsbeispiel der Erfindung kann der Möbelantrieb 4 zusammen mit der Kraftübertragungseinrichtung 5 in einem Gehäuse einer gemeinsamen Baueinheit zusammengefasst werden, wobei lediglich der Stößel 6 aus dem Gehäuse dieser gemeinsamen Baueinheit herausgeführt ist.

## Patentansprüche

1. Anordnung mit einem Möbelantrieb (4) zum Ausstoßen eines bewegbaren Möbelteiles (3) aus einer geschlossenen Endlage relativ zu einem Möbelkorpus (2) und mit einer Kraftübertragungseinrichtung (5) zur Übertragung einer Kraft auf das bewegbare Möbelteil (3), wobei der Möbelantrieb (4), der an einer am Möbelkorpus (2) zu befestigenden Grundplatte (8) gelagert ist, aufweist:
- ein Gehäuse (9),
- eine im oder am Gehäuse (9) angeordnete elektrische Antriebseinheit (10),
- einen durch die elektrische Antriebseinheit (10) antreibbaren Ausstoßhebel (12) zum Übertragen einer Bewegung auf das bewegbare Möbelteil (3),
- wobei der Ausstoßhebel (12) einerseits um eine Drehachse (11) drehbar gelagert ist und andererseits ein freies Hebelende (13) aufweist, wobei der Ausstoßhebel (12) zwischen Drehachse (11) und dem freien Hebelende (13) eine Ausstoßfläche (14) aufweist,
- wobei die Kraftübertragungseinrichtung (5) zumindest einen bewegbar gelagerten Stößel (6) zum Ausstoßen des bewegbaren Möbelteiles (3) aufweist,
- wobei der Stößel (6) entlang einer Führung (17) der Grundplatte (8) linear verschiebbar gelagert ist,
**dadurch gekennzeichnet,**
- **dass** die Ausstoßfläche (14) des Ausstoßhebels (12) wenigstens bereichsweise eine Verzahnung (15) aufweist,
- **dass** die Verzahnung (15) des Ausstoßhebels (12) mit einer Gegenverzahnung (16) der Kraftübertragungseinrichtung (5) zusammenwirkt,
- **dass** die Gegenverzahnung (16) mit dem Stößel (6) verbunden ist,
- **dass** im montierten Zustand des Möbelantriebes (4) die Stelle, an welcher die Verzahnung (15) und die Gegenverzahnung (16) sich gegenseitig berühren, beim Ausstoßen des bewegbaren Möbelteils (3) ausgehend von der Nähe der Drehachse (11) des Ausstoßhebels (12) in Richtung zum freien Hebelende (13) des Ausstoßhebels (12) hin wandert, wobei eine im Wesentlichen gleichmäßige Veränderung des Kraftarms erfolgt.

2. Anordnung nach Anspruch 1, **dadurch gekennzeichnet, dass** die Verzahnung (15) zumindest einen gekrümmten Abschnitt (15a, 15b) aufweist.

3. Anordnung nach Anspruch 1 oder 2, **dadurch gekennzeichnet, dass** die Verzahnung (15) zumindest abschnittsweise als Unrundverzahnung ausgebildet ist.

4. Anordnung nach einem der Ansprüche 1 bis 3, **dadurch gekennzeichnet, dass** die Verzahnung (15) mit dem Ausstoßhebel (12) bewegungsgekoppelt verbunden ist oder dass die Verzahnung (15) zusammen mit dem Ausstoßhebel (12) einstückig ausgebildet ist.

5. Anordnung nach Anspruch einem der Ansprüche 1 bis 4, **dadurch gekennzeichnet, dass** die Gegenverzahnung (16) zumindest abschnittsweise gekrümmt ausgebildet ist.

6. Anordnung nach einem der Ansprüche 1 bis 5, **dadurch gekennzeichnet, dass** die Ausstoßrichtung (29) des Stößels (6) quer zur Ausstoßrichtung des Ausstoßhebels (12) verläuft.

7. Anordnung nach einem der Ansprüche 1 bis 6, **dadurch gekennzeichnet, dass** eine Federvorrichtung (25) vorgesehen ist, durch die der Stößel (6) und/oder der Ausstoßhebel (12) nach einem Ausstoßvorgang wieder in eine Bereitschaftsstellung rückstellbar ist bzw. sind.

8. Anordnung nach einem der Ansprüche 1 bis 7, **dadurch gekennzeichnet, dass** der Stößel (6) in der geschlossenen Endlage des bewegbaren Möbelteiles (3) an diesem anliegt.

9. Anordnung nach Anspruch 8, **dadurch gekennzeichnet, dass** eine Zuhaltevorrichtung (21) vorgesehen ist, durch die das bewegbare Möbelteil (3) in der vollständigen Schließstellung gehalten und/oder in die vollständige Schließstellung bewegbar ist.

10. Anordnung nach Anspruch 9, **dadurch gekennzeichnet, dass** die Zuhaltevorrichtung (21) wenigstens zwei Teile umfasst, wobei ein erster Teil (22) am Stößel (6) und ein zweiter Teil am bewegbaren Möbelteil (3) angeordnet oder ausgebildet ist, wobei die beiden Teile (22) in der Schließstellung des bewegbaren Möbelteiles (3) aufeinander eine magnetische Anziehungskraft ausüben.

11. Anordnung nach einem der Ansprüche 1 bis 10, **dadurch gekennzeichnet, dass** das Gehäuse (9) des Möbelantriebs (4) eine Längsrichtung (L) aufweist, wobei die Richtung (35) der Linearbewegung des Stößels (6) im Wesentlichen parallel zur Längsrichtung (L) des Gehäuses (9) verläuft.

## Claims

1. An arrangement comprising an electric drive (4) for ejecting a movable furniture part (3) from a closed end position relative to a furniture carcass (2), and a force transmitting device (5) for transmitting a force to the movable furniture part (3), wherein the furniture drive (4), which is supported on a base plate (8) to be fixed to the furniture carcass (2), includes:
- a housing (9),
- an electrical drive unit (10) arranged in or on the housing (9),
- an ejection lever (12) configured to be driven by the electrical drive unit (10) for transmitting a movement to the movable furniture part (3),
- wherein the ejection lever (12) is, one the one hand, pivotally supported about a pivoting axis (11) and, on the other hand, has a free lever end (13), wherein the ejection lever (12) includes an ejection surface (14) between the pivoting axis (11) and the free lever end (13),
- wherein the force transmitting device (5) includes at least one movably supported ram (6) for ejecting the movable furniture part (3),
- wherein the ram (6) is linearly displaceable along a guide (17) of the base plate (8),
**characterized in that**
- the ejection surface (14) of the ejection lever (12) has a tooth arrangement (15) at least over a region,
- the tooth arrangement (15) of the ejection lever (12) cooperates with a counter tooth arrangement (16) of the force transmitting device (5),
- the counter tooth arrangement (16) is connected to the ram (6),
- in a mounted condition of the furniture drive (4), a location at which the tooth arrangement (15) and the counter tooth arrangement (16) rest against each other, moves, upon ejecting the movable furniture part (3), from a region adjacent to the pivoting axis (11) of the ejection lever (12) in a direction towards the free lever end (13) of the ejection lever (12) so as to achieve a substantially uniform transition in the moment arm.

2. The arrangement according to claim 1, **characterized in that** the tooth arrangement (15) includes at least one curved section (15a, 15b).

3. The arrangement according to claim 1 or 2, **characterized in that** the tooth arrangement (15) is configured as an eccentric tooth arrangement at least over a region.

4. The arrangement according to one of the claims 1 to 3, **characterized in that** the tooth arrangement (15) is motionally coupled to the ejection lever (12), or that the tooth arrangement (15), together with the ejection lever (12), has a one-piece configuration.

5. The arrangement according to one of the claims 1 to 4, **characterized in that** the counter tooth arrangement (16) has a curved configuration at least over a region.

6. The arrangement according to one of the claims 1 to 5, **characterized in that** the ejection direction (29) of the ram (6) extends transversely to the ejection direction of the ejection lever (12).

7. The arrangement according to one of the claims 1 to 6, **characterized in that** a spring device (25) is provided by which the ram (6) and/or the ejection lever (12) can be resetted again into a ready position after an ejection operation.

8. The arrangement according to one of the claims 1 to 7, **characterized in that** the ram (6), in the closed end position of the movable furniture part (3), rests against the movable furniture part (3).

9. The arrangement according to claim 8, **characterized in that** a closing retaining device (21) is provided by which the movable furniture part (3) is held in the final end position, and/or can be moved into the final end position.

10. The arrangement according to claim 9, **characterized in that** the closing retaining device (21) includes at least two portions, wherein a first portion (22) is formed or arranged on the ram (6) and a second portion is formed or arranged on the movable furniture part (3), wherein the two portions (22) exert a magnetic attraction force to one another in the closed position of the movable furniture part (3).

11. The arrangement according to one of the claims 1 to 10, **characterized in that** the housing (9) of the electric drive (4) has a longitudinal direction (L), and the direction (35) of the linear movement of the ram (6) extends substantially parallel to the longitudinal direction (L) of the housing (9).

## Revendications

1. Dispositif avec un entraînement pour meubles (4) pour éjecter une partie de meuble mobile (3) d'une position terminale fermée par rapport à un corps de meuble (2) et avec un dispositif de transmission de force (5) pour transmettre une force sur la partie de meuble mobile (3), dans lequel l'entraînement pour meubles (4), qui est logé sur une plaque de base (8) devant être fixée au corps de meuble (2), présente:
- un boîtier (9),
- une unité d'entraînement électrique (10) disposée dans ou sur le boîtier (9),
- un levier éjecteur (12) pouvant être entraîné par l'unité d'entraînement électrique (10) pour transmettre un mouvement à la partie de meuble mobile (3),
- dans lequel le levier éjecteur (12), d'une part, est logé de façon rotative autour d'un axe de rotation (11) et, d'autre part, présente une extrémité de levier libre (13), dans lequel le levier éjecteur (12) présente une surface d'éjection (14) entre l'axe de rotation (11) et l'extrémité de levier libre (13),
- dans lequel le dispositif de transmission de force (5) présente au moins un poussoir (6) logé de façon mobile pour éjecter la partie de meuble mobile (3),
- dans lequel le poussoir (6) est logé de façon déplaçable linéairement le long d'un guidage (17) de la plaque de base (8),
**caractérisé en ce**
- **que** la surface d'éjection (14) du levier éjecteur (12) présente au moins par endroits une denture (15),
- **que** la denture (15) du levier éjecteur (12) interagit avec une contre-denture (16) du dispositif de transmission de force (5),
- **que** la contre-denture (16) est reliée au poussoir (6),
- **qu'**à l'état monté de l'entraînement de meuble (4), la position, à laquelle la denture (15) et la contre-denture (16) se touchent mutuellement, lors de l'éjection de la partie de meuble mobile (3), avance depuis la proximité de l'axe de rotation (11) du levier éjecteur (12) en direction de l'extrémité de levier libre (13) du levier éjecteur (12), une modification essentiellement régulière du bras de force se produisant alors.

2. Dispositif selon la revendication 1, **caractérisé en ce que** la denture (15) présente au moins une section courbe (15a, 15b).

3. Dispositif selon la revendication 1 ou 2, **caractérisé en ce que** la denture (15) est conçue au moins par endroits comme une denture non circulaire.

4. Dispositif selon l'une des revendications 1 à 3, **caractérisé en ce que** la denture (15) est reliée au levier éjecteur (12) en étant couplée par mouvement ou **en ce que** la denture (15) est conçue d'une seule pièce avec le levier éjecteur (12).

5. Dispositif selon l'une des revendications 1 à 4, **caractérisé en ce que** la contre-denture (16) est conçue courbe au moins par endroits.

6. Dispositif selon l'une des revendications 1 à 5, **caractérisé en ce que** le sens d'éjection (29) du poussoir (6) passe transversalement au sens d'éjection du levier éjecteur (12).

7. Dispositif selon l'une des revendications 1 à 6, **caractérisé en ce qu'**un dispositif à ressort (25) est prévu, par lequel le poussoir (6) et / ou le levier éjecteur (12), après un processus d'éjection, peut ou peuvent être remis dans une position d'attente.

8. Dispositif selon l'une des revendications 1 à 7, **caractérisé en ce que** le poussoir (6) dans la position terminale fermée de la partie de meuble mobile (3) est adjacent à celle-ci.

9. Dispositif selon la revendication 8, **caractérisé en ce qu'**un dispositif de verrouillage (21) est prévu, par lequel la partie de meuble mobile (3) est maintenue dans la position de fermeture totale et / ou est mobile dans la position de fermeture totale.

10. Dispositif selon la revendication 9, **caractérisé en ce que** le dispositif de verrouillage (21) comprend au moins deux parties, dans lequel une première partie (22) est disposée ou conçue sur le poussoir (6) et une deuxième partie sur la partie de meuble mobile (3), dans lequel les deux parties (22) dans la position de fermeture de la partie de meuble mobile (3) exercent l'une sur l'autre une force d'attraction magnétique.

11. Dispositif selon l'une des revendications 1 à 10, **caractérisé en ce que** le boîtier (9) de l'entraînement pour meubles (4) présente un sens longitudinal (L), dans lequel le sens (35) du mouvement linéaire du poussoir (6) passe essentiellement parallèle au sens longitudinal (L) du boîtier (9).
